(19) Europäisches Patentamt
European Patent Office
Office européen des brevets

(11) Veröffentlichungsnummer: **0 001 968**
**B1**

(12) **EUROPÄISCHE PATENTSCHRIFT**

(45) Veröffentlichungstag der Patentschrift: **03.02.82**

(51) Int. Cl.$^3$: **C 08 G 69/28**

(21) Anmeldenummer: **78100922.0**

(22) Anmeldetag: **18.09.78**

# (54) Verfahren zur Herstellung von Polyamiden aus Isophthalsäure und Hexamethylendiamin.

(30) Priorität: **28.09.77 DE 2743515**

(43) Veröffentlichungstag der Anmeldung:
**30.05.79 Patentblatt 79/11**

(45) Bekanntmachung des Hinweises auf die Patenterteilung:
**03.02.82 Patentblatt 82/5**

(84) Benannte Vertragsstaaten:
**DE FR GB NL**

(56) Entgegenhaltungen:

**DE - A - 1 420 237**
**FR - A - 1 393 052**
**US - A - 3 846 381**

(73) Patentinhaber: **BAYER AG**
**Zentralbereich Patente, Marken und Lizenzen**
**D-5090 Leverkusen 1, Bayerwerk (DE)**

(72) Erfinder: **Nielinger, Werner, Dr.**
**Bärenstrasse 21**
**D-4150 Krefeld (DE)**
Erfinder: **Neuray, Dieter, Dr.**
**Buschstrasse 149**
**D-4150 Krefeld (DE)**
Erfinder: **Brassat, Bert, Dr**
**Bethelstrasse 24**
**D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 001 968 B1

Courier Press, Leamington Spa, England.

# Verfahren zur Herstellung von Polyamiden aus Isophthalsäure und Hexamethylendiamin

Die vorliegende Erfindung betrifft Polyamide aus Isophthalsäure und Hexamethylendiamin, die unter Zusatz von Ameisensäure hergestellt werden.

Polyamide aus Isophthalsäure und Hexamethylendiamin sind aus den US-Patentschriften 2 715 620 und 2 742 496 bekannt. Sie können nach bekannten Verfahren hergestellt werden, beispielsweise durch Polykondensation von Hexamethylendiamin und Isophthalsäuredihalogenid bei tiefen Temperaturen in Lösung bzw. in der Phasengrenzfläche oder durch Polykondensation von Isophthalsäure und Hexamethylendiamin in der Schmelze.

Die Polykondensation der Monomeren in der Schmelze erfolgt analog dem Herstellungsverfahren von 6,6-Polyamid. Dabei können die handelsüblichen Monomeren entweder direkt oder als Salz, das in einem gesonderten Arbeitsgang hergestellt wird, eingesetzt werden.

Gemäß der DT—OS 2 657 311 kann die Polykondensation des Salzes vorteilhafterweise auch ohne gesonderte Reinigung des Salzes vorgenommen werden.

Wie allgemein bekannt, ist es für zahlreiche Einsatzgebiete der Polyamide erforderlich, die Viskosität der Polyamide zu regeln und so Produkte mit einer brauchbaren Schmelzviskosität und günstigen, reproduzierbaren Verarbeitungseigenschaften zu erhalten Üblicherweise geschieht dies durch Zugabe von Monocarbonsäuren während der Polykondensation der Monomeren. Gemäß der Lehre der US—PS 2 174 527 kann eine Vielzahl von den verschiedensten Monocarbonsäuren zur Regelung verwendet werden. Ameisensäure wird nicht erwähnt. Untersuchungen mit Ameisensäure bei der Polykondensation von Caprolactam ergaben andererseits, daß diese Säure als eine Art Polykondensationsbeschleuniger wirkt und weit schneller zu hochmolekularen Produkten führt, als wenn die Polykondensation ohne Zugabe von Ameisensäure durchgeführt wird (vgl. USP 2 562 797). Daher konnte man nicht erwarten, daß sich die Ameisensäure zur Regelung bzw. Stabilisierung der Viskosität von Polyamiden eignet, zumal sie sich auch nach den Angaben der genannten Patentschrift under den Polykondensationsbedingungen zersetzt.

Es war daher überraschend, daß sich die Ameisensäure bei der Kondensation von Isophthalsäure und Hexamethylendiamin und gegebenenfalls weiteren Monomeren hervorragend zur Regelung eignet, wenn sie vor der Polykondensation zugesetzt wird, während weder die Zugabe während oder nach der Polykondensation noch die Verwendung der in den US—PS 2 174 527 genannten Monocarbonsäuren den gewünschten Effekt bringt. Dieses Ergebnis ist auch im Hinblick auf die Lehre des US—PS 3 846 381 völlig unerwartet, da auch in dieser Patentschrift darauf hingewiesen wird, daß zur Verhinderung der Gelbildung das Polyamid mit ameisensäurehaltigen Dampf behandelt werden soll und der gewünschte Erfolg nicht eintritt, wenn die Ameisensäure der wäßrigen Lösung des polyamidbildenden Salzes zugesetzt wird.

Gegenstand der Erfindung ist daher ein Verfahren zur Herstellung von transparenten Polyamiden durch Polykondensation der Salze aus Isophthalsäure und Hexamethylendiamin und gegebenenfalls 0—30 Mol % eines Salzes aus Isophthalsäure und einem Bis-(4-aminocyclohexyl)-alkan oder des Salzes aus Isophthalsäure und Isophorondiamin oder einer Aminocarbonsäure bzw. eines Lactams in Gegenwart einer Monocarbonsäure, das dadurch gekennzeichnet ist, daß die Polykondensation nach Zusatz von 0,01—5, vozugsweise 0,1 bis 3 Mol %, Ameisensäure oder Ameisensäurebildner, bezogen auf die Salze, durchgeführt wird.

Anstelle der Ameisensäure können auch Ameisensäure bildende Verbindungen wie Natriumformiat, Formamid oder Dimethylformamid und Ester der Ameisensäure verwendet werden.

Die Isophthalsäure kann bis zu 30 Mol % durch Terephthalsäure ersetzt werden. Als Comonomer für das erfindungsgemäße Verfahren eignen sich Isophorondiamin, Bis-(4-aminohexyl)-alkane der allgemeinen Formel

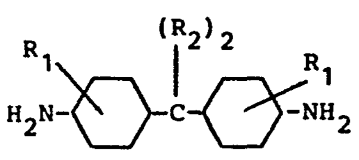

mit $R_1$ und $R_2$, gleich oder verschieden, Wasserstoff oder ein Alkylrest mit $C_1$—$C_3$, vorzugsweise Bis-(4-aminocyclohexyl)-methan, Bis-(4-aminocyclohexyl)-propan, Bis-(4-amino-3-methylcyclohexyl)-methan oder Aminocarbonsaüren oder Lactame mit $C_5$—$C_{12}$ wie z.B. ε-Caprolactam, Laurinlactam und 11-Aminoundecansäure.

Die Herstellung des Polyamids kann erfolgen, indem man zunächst die Diaminkomponente und Isophthalsäure in Wasser zu einer 50 bis 85%igen Salzlösung umsetzt und diese Lösung — also vorzugsweise ohne Isolierung des Salzes — nach den bekannten Verfahren polykondensiert. Die Ameisensaüre kann vor der Polykondensation zur Salzlösung gegeben werden, vorzugsweise wird sie jedoch dem Wasser vor der Salzherstellung zugesetzt. Die Salzherstellung kann aber auch in anderen Lösungs- oder Suspensionsmitteln wie Alkoholen, Alkohol-Wasser-Gemischen erfolgen. Als Alkohole

dienen beispielsweise Methanol oder Äthanol. Diese Salze, die vorzugsweise nach ihrer Herstellung isoliert werden, werden nach Zusatz der Ameisensäure in bekannter Weise polykondensiert.

Die Salzlösung wird vorzugsweise zunächst bei ca. 210° C im verschlossenen Autoklaven unter dem sich einstellenden Druck vorkondensiert, die weitere Polykondensation wird nach Entspannen auf Atmosphärendruck bei Temperaturen zwischen 260 und 300°C bis zum Erreichen des Gleichgewichts durchgeführt.

Um Produkte mit technisch brauchbaren Eigenschaften zu erhalten, sollte ein Molekulargewicht entsprechend einer relativen Viskosität von mindestens $\eta_{rel} = 2{,}2$ (gemessen als 1%ige Lösung des Polyamids in m-Kresol bei 25°C) erreicht werden.

Ausgezeichnete Eigenschaften werden erhalten, wenn die relative Viskosität auf Werte zwischen 2,2 und 3,5, vorzugsweise 2,5 und 3,0, eingestellt wird.

Die erfindungsgemäßen Polyamide sind nicht kristallin, völlig transparent und farblos. Sie zeichnen sich durch hohe Zähigkeit und gutes Verarbeitungsverhalten aus.

Die Polyamide können auf handelsüblichen Maschinen durch Spritzguß oder Extrusion zu Formkörpern, Folien, Platten, Fasern, Borsten oder Hohlkörpern verarbeitet werden. Aufgrund ihrer elektrischen Eigenschaften können sie als Elektroisolierstoff eingesetzt werden.

Sie können außerdem Füllstoffe, insbesondere Glasfasern, Entformungsmittel, Schmiermittel, Brandschutzmittel, Stabilisatoren, Pigmente oder andere Farbstoffe in bekannten, üblichen Mengen enthalten.

Beispiel 1

a) Herstellung eines Salzes aus Isophthalsäure und Hexamethylendiamin.

Man suspendiert 830,6 g (5 Mol) Isophthalsäure (IPA 99® der Amoco) in 6,25 l Äthanol und gibt dazu unter Rühren und unter Stickstoff bei Rückflußtemperatur im Verlaufe einer Stunde eine Lösung von 586,8 g (5 Mol mit 1 Gew.-% überschuß) Hexamethylendiamin in 805 ml Athanol. Nach Zugabe des Hexamethylendiamins erhitzt man die Suspension des gebildeten Salzes eine weitere Stunde und saugt nach dem Abkühlen ab. Das Salz wird einmal mit Äthanol gewaschen und bei 100°C im Vakuum getrocknet. Es wird ohne weitere Reinigung zur Herstellung des Polyamids eingesetzt.

b) Polykondensation des Salzes.

112,9 g des gemäß a) erhaltenen Salzes aus Isophthalsäure und Hexamethylendiamin sowie 0,93 g Hexamethylendiamin (2 Gew.-%, bezogen auf den Diaminanteil im Salze zur Kompensation der bei der Polykondensation auftretenden Verluste) werden unter Rühren in einer Stickstoffatmosphäre 2 Stunden bei 220°C und danach 3 Stunden bei 270°C polykondensiert. Man erhält ein transparentes Polyamid, das in m-Kresol stark quilt und sich mehr löst.

Wird die oben beschriebene Polykondensation unter Zusatz von 0,18 g (1 Mol %) Ameisensäure durchgeführt, dann erhält man ein Polyamid, das in m-Kresol glatt löslich ist und keine Quellkörper bildet. Die relative Viskosität dieses Polyamids, gemessen an einer 1%igen Lösung des Polyamids in m-Kresol bei 25°C in einem Ubbelohde-Viskosimeter, beträgt 2,71.

Beispiel 2

Man stellt unter Ausschluß von Luftsauerstoff eine Lösung aus 3,835 kg (33 Mol) Hexamethylendiamin und 15,19 g (1 Mol %, bezogen auf das Hexamethylendiamin) Ameisensäure in 3,1 kg Wasser her und gibt dazu im Verlaufe von etwa 40 Minuten bei ca. 85°C 5,482 kg Isophthalsäure. Der pH-Wert einer auf 5 Gew.-% Feststoff verdünnten Probe beträgt 6,2.

Die noch heiße, klare Lösung gibt man in einen mit Stickstoff gefüllten Autoklaven. Man verschließt den Autoklaven und kondensiert unter Rühren zunächst eine Stunde bei 210°C. Dabei stellt sich ein Druck von ca. 19 bar ein. Danach wird vorsichtig unter gleichzeitigem Aufheizen entspannt, wobei das Wasser abdestilliert. Die weitere Polykondensation wird drei Stunden bei 270°C unter Stickstoff durchgeführt.

Das Polyamid wird dann als Borste durch eine Wasserbad abgezogen, granuliert und getrocknet. Man erhält ein transparentes, farbloses Material mit einer relativen Viskosität von 2,6, gemessen an einer 1%igen Lösung des Polyamids in m-Kresol bei 25°C in einem Ubbelohde Viskosimeter.

Das Polyamid wird auf einer handelsüblichen Spritzgußmaschine zu transparenten Formkörpern verarbeitet, an denen die folgenden Eigenschaften gemessen werden:

| | | |
|---|---|---|
| Schlagzähigkeit | (DIN 53 453) | nicht gebrochen |
| Kerbschlagzähigkeit | (DIN 53 453) | 2,9 kJ/$m^2$ |
| Reißdehnung | (DIN 53 455) | 41% |

Ein auf analoge Weise, jedoch ohne Zusatz von Ameisensäure hergestelltes Polyamid mit einer relativen Viskosität von 2,8 hatte folgende Werte:

| | | |
|---|---|---|
| Schlagzähigkeit | (DIN 53 453) | nicht gebrochen |
| Kerbschlagzähigkeit | (DIN 53 453) | 1,9 kJ/m$^2$ |
| Reißdehnung | (DIN 53 455) | 25% |

**Patentansprüche**

1. Verfahren zur Herstellung von transparenten Polyamiden durch Polykondensation der Salze aus Isophthalsäure und Hexamethylendiamin in Gegenwart einer Monocarbonsäure, dadurch gekennzeichnet, daß die Polykondensation nach Zusatz von 0,01—5 Mol-% Ameisensäure oder Ameisensäurebildner, bezogen auf die Ausgangsmonomeren, durchgeführt wird.

2. Verfahren nach Anspruch 1, dadurch gekennzeichnet, daß 0—30 Mol-% Terephthalsäure und 0—30 Mol-% Bis-(4-aminocyclohexyl)-alkan oder Isophorondiamine oder 0—30 Mol-% einer Aminocarbonsäure bzw. eines Lactams cokondensiert werden.

3. Verfahren nach Ansprüchen 1 und 2, dadurch gekennzeichnet, daß 0,1—3 Mol-% Ameisensäure oder Ameisensäurebildner verwendet werden.

**Revendications**

1. Procédé de production de polyamides transparents par polycondensation des sels d'acide isophtalique et d'hexaméthylènediamine en présence d'un acide monocarboxylique, caractérisé en ce que la polycondensation est conduite après addition de 0,01—5 moles % d'acide formique ou de générateur d'acide formique, par rapport aux monomères de départ.

2. Procédé suivant la revendication 1, caractérisé en ce qu'on co-condense 0—30 moles % d'acide téréphtalique et 0—30 moles % de bis-(4-aminocyclohexyl)-alcane ou d'isophorone-diamines et 0—30 moles % d'un acide aminocarboxylique ou d'un lactame.

3. Procédé suivant les revendications 1 et 2, caractérisé en ce qu'on utilise 0,1—3 moles % d'acide formique ou de générateur d'acide formique.

**Claims**

1. A process for the production of transparent polyamides by subjecting the salts of isophthalic acid and hexamethylene diamine to polycondensation in the presence of a monocarboxylic acid, characterised in that polycondensation is carried out after the addition of from 0.01 to 5 mole percent of formic acid or formic acid donors, based on the starting monomers.

2. A process as claimed in Claim 1, characterised in that from 0 to 30 mole percent of terephthalic acid and from 10 to 30 mole percent of bis-(4-aminocyclohexyl)-alkane or isophorone diamine or from 0 to 30 mole percent of an aminocarboxylic acid or a lactam are co-condensed.

3. A process as claimed in Claims 1 and 2, characterised in that from 0.1 to 3 mole percent of formic acid or a formic acid donor is used.